# EUROPEAN PATENT APPLICATION

(11) **EP 3 748 038 A2**
(43) Date of publication of application: **09.12.2020**
(21) Application number: 20000346.5
(22) Date of filing: 29.09.2020
(51) Int. Cl.: C25B 1/00, C01B 32/19

(54) **METHOD FOR MANUFACTURING LARGE-AREA GRAPHENE ON POLYMER SUPPORTS BY HYDROGEN DELAMINATION**

(30) Priority: 29.06.2020 PL 43449220
(71) Applicant: Advanced Graphene Products Sp. z o.o., 66-002 Zielona Góra (PL)
(72) Inventor: Pelka, Marcin, 64-300 Nowy Tomysl (PL); Kuten, Dominika, 64-920 Pila (PL); Galazka, Maciej, 66-200 Swiebodzin (PL)
(74) Representative: Passowicz, Marek

(57) **Abstract**

The method of producing large-area graphene on the polymer supports, during which obtaining a large-area graphene layer deposited on a polymer takes place by electrochemical separation of graphene G with the polymer P from the metallic growth substrate M in the form of a profiled sheet, wherein the separation process is carried out by using hydrogen delamination.

## Description

The present invention generally relates to a manufacturing method for making large-area graphene on polymer supports by using of hydrogen delamination and, more specifically, to a transfer method of the large-area graphene on the polymer supports by the hydrogen delamination.

Separating the vapour-deposited graphene (CVD) from the metal catalyst on which it is nucleated and then transferring it onto a dielectric substrate is an established method of producing graphene. Most transfer techniques use chemical etching to dissolve metal catalysts, resulting in high material costs. Moreover, the removal of the growth substrate by etching agents has a negative impact not only on generating a significant amount of waste containing heavy metals but also on the quality of the obtained graphene layer. An alternative method may be hydrogen delamination, which does not generate such significant amounts of harmful waste. Additionally, it is possible to recover the growth substrate that can be reused in the graphene growth process.

Delamination is the process of deatachment of layers of the composite material, especially laminates. It consists in the gradual, progressive loosening of the structural fibres from the binder ("matrix") with which they are joined, due to the loss of cohesion of individual component layers. It occurs especially when the composite material is subject to frequent variable deformation forces, including stresses resulting from temperature changes.

Hydrogen delamination involves the use of electrochemical corrosion to separate the graphene layer from the growth substrate. Corrosion processes are caused by electrochemical processes occurring as a result of various potentials on the surface of a corrosive object in the electrolyte environment. In such a situation, corrosion cells are formed, in which- the fragments of the metal surface with a lower potential are anodes - they are subject to oxidation of the metal passing into the solution. Reduction reactions of the so-called depolarizer take place at the cathodes of the corrosion cells. The role of depolarizer is played by hydrogen ions (hydrogen depolarization), which are reduced to hydrogen gas.

Large-area graphene is the material most often produced on ultra-pure metal foils or silicon carbide. The separation of the graphene layer from the growth substrate is necessary for further research and application of this material. In the first stage, graphene is covered with a layer of polymeric support, e.g. poly (methyl methacrylate) (PMMA) and annealed. In the next step, the polymer film with graphene is separated from the growth substrate. Hydrogen delamination is a transfer method based on the mechanical separation of polymer-coated graphene from a metallic substrate. This process may occur due to the release of hydrogen bubbles at the cathode, which is a metallic growth substrate with polymer-coated graphene (Sun J., Mechanism of Electrochemical Delamination of Two-Dimensional Materials from Their Native Substrates by Bubbling, 2015).

In the delamination system, it is possible to use anode made of various materials, e.g. graphite, silver, platinum or glassy carbon. Delamination takes place in a vessel filled with electrolyte. The type and concentration of the electrolyte are among the key parameters that affect the efficiency of the hydrogen delamination process. The process is also influenced by other factors, such as sample size or current conditions (Sun J., Mechanism of Electrochemical Delamination of Two-Dimensional Materials from Their Native Substrates by Bubbling, 2015).

On the basis of the patent publication PL 231088 B1 a device for semi-automatic fast electrochemical delamination with adjustable speed and current in the circuit, enabling the transfer of graphene from copper to the target substrate is known.

Patent publication US 9,216,559 B2 discloses the separation of graphene grown on a platinum substrate by the hydrogen delamination method, in which the graphene growth substrate is the cathode, the pure platinum plate is the anode, and the 1 M aqueous NaOH solution is the electrolyte. Graphene coated with the polymer layer is separated from the growth substrate by the release of hydrogen bubbles on the surface of the growth substrate between the growth substrate and the graphene.

On the basis of the patent publication US 9,272,910 B2 hydrogen delamination of graphene from a copper foil using a variable voltage of electric current is known. The solution uses glassy carbon as the anode and 0.05 M aqueous K2S2O5 solution as the electrolyte.

On the basis of the patent publication US 2014/0238873 A1, hydrogen delamination using a constant voltage is known. In the solution, aqueous solutions of K2SO4, K2S2O8, NaOH were used as an electrolyte.

On the basis of the patent publication US 2014/0238873 A1, hydrogen delamination using a constant voltage is known. In the solution, aqueous solutions of K2SO4, K2S2O8, NaOH were used as an electrolyte.

A method for separating graphene from a liquid formed matrix is known from the patent publication PL 224447 B1. According to this method, the separation of graphene is carried out after cooling the matrix in a pure argon atmosphere with a constant partial pressure of not more than 1100 hPa, in the temperature range from 1200 °C to 1050 °C, while maintaining the cooling rate in the range from 0.1 to 2 °C/min. Thus, the mentioned technology is very time-consuming and requires complicated and expensive instrumentation.

The methods presented in the above-mentioned patents allow to obtain small areas of graphene layers. So far, there is no known method of obtaining large surfaces of graphene layers in a short time.

The purpose of the present invention was:
- Development of a method for the production of large-area graphene with an area ranging from 1 cm2 to 750 cm2 and more on polymer supports by the hydrogen delamination method.
- Obtaining large-area graphene with an area ranging from 1 cm2 to 750 cm2 and more on polymer supports produced by this method.

The nature of the method according to the present invention consists in the fact that the separation process is carried out in a hydrogen delamination system with the use of graphite, silver or platinized titanium anode, an aqueous solution of NaOH, NaCl or KCl with a concentration in the range of 0.1 - 1 M as the electrolyte, a constant value of voltage, in the range from 2 to 6 V and variable value of electric current intensity.

It is preferable to use a graphite, silver or platinum titanium anode due to slight contamination and degradation of the graphene structure. The introduction of impurities and defects in the structure negatively affects, among others. electrical and mechanical properties of the graphene layer.

It is advantageous to cut a graphene substrate sheet on the desired surface, and then press-profiling the layer.

It is also advantageous if the profiled layer is polymer coated, preferably acrylic PMMA. It is advantageous to use a guide with an automatic drive and a knife for semi-automatic layer application (manual controlled knife height). Due to, PMMA acrylic polymer layer has an even thickness over the entire surface of the sheet, and the process of hydrogen delamination of the polymer carrier is uniform without negatively affecting the graphene layer.

It is further preferred that the electrochemical delamination process is assisted mechanically by creating anchor points, which points are created by cutting a sheet covered with PMMA acrylic polymer. It is characteristic that incision creates a point that initiates the process of hydrogen delamination by creating the contact surface of the copper - graphene sheet with the electrolyte.

Moreover, it is preferable that the area of the graphene-free metal growth substrate be protected by a flexible material made of acrylic polymer, epoxy resin, ethylene and vinyl acetate or other origin, which reduces the contact surface of the copper-graphene sheet with the electrolyte, minimizing hydrogen evolution and minimizing the value of the current flowing through it.

Hydrogen delamination of the graphene according to the invention takes place in a short time and covers areas, ranging from 1 cm2 to 750 cm2 and more, of graphene on the growth substrates covered with a polymer film.

The large-area graphene on polymer support produced in this way, with an area ranging from 1 cm2 to 750 cm2 and more, can be directly used in graphene applications or used for transfers to target substrates.

The advantage of the method, according to the invention, is an automated process that is easy for the operator to carry out.

The method according to the invention will be described in more detail based on the following examples, while the attached drawing illustrates 3 stages of rigging the applied polymer to obtain a polymer coating:
Fig. 1 shows the application, using a dosing apparatus, of individual drops of polymer to graphene on the growth matrix;
Fig. 2 - Spreading the polymer over a graphene layer using a blade coating tool;
Fig. 3 shows the directions of the distribution of the polymer layer.

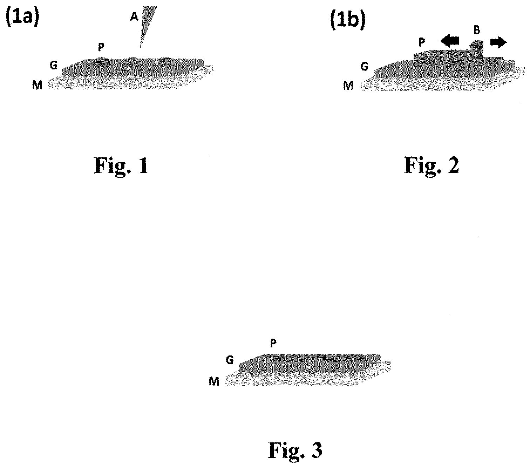

The first stage of the coating process is the application of single polymer drops to the graphene on the growth matrix (1a) by dosing equipment. The next step of the process is spreading the polymer on the graphene layer using a blade-coating tool (1b). Figure 1b shows the distribution directions of the polymer layer. The final stage of graphene coating is the evaporation of the polymer solvent (1c). This process can be accelerated by heating the system at an appropriate temperature.

### Example 1

225 cm2 area of graphene on the growth substrate is cut out with a cutting tool. Then, the graphene on the growth substrate is straightened by the manual pressure method and covered with a layer of PMMA acrylic polymer in the amount of 2.25 ml by the manual blade coating method. The system is left on a heating plate and heated to a 60 ° C and for 1 hour. The catching points for the phenomenon of the mechanical detachment of the graphene film are prepared. A flexible material is used to protect the area of the growth substrate without graphene covered with polymer. Polymer coated graphene on a growth substrate is mounted in a delamination system. A 0.5 M aqueous NaOH solution is used as the electrolyte. A graphite plate is used as the anode. The hydrogen delamination process is carried out at a constant voltage value of 4 V. The delamination process is carried out for 2.5 minutes.

### Example 2

400 cm2 area of graphene on the growth substrate is cut out with a cutting tool. Then the graphene on the growth substrate is straightened by the manual pressure method and covered with a layer of PMMA acrylic polymer in the amount of 4 ml by the spin coating method. Then growth substrate with polymer is left on a heating plate and heated to a temperature 60 ° C for 1 hour. The anchor points for the phenomenon of the mechanical detachment of the graphene film are prepared. A flexible material is used to protect the area of the growth substrate without graphene covered with polymer. Polymer coated graphene on a growth substrate is mounted in a delamination system. A 1 M aqueous KCl solution is used as the electrolyte. A plate of platinized titanium is used as the anode. The hydrogen delamination process is carried out at a constant voltage value of 6 V. The delamination process is carried out for 2.5 minutes.

### Example 3

400 cm2 area of graphene on the growth substrate is cut out with a cutting tool. Then the graphene on the growth substrate is straightened by the manual pressure method and covered with a layer of PMMA acrylic polymer in the amount of 4 ml by the automatic blade coating method. The system is left on a heating plate heated to a temperature of about 60 ° C and heated for 1 hour. The anchor points for the phenomenon of the mechanical detachment of the graphene film are prepared. A flexible material is used to protect the area of the growth substrate without graphene covered with polymer. Polymer coated graphene on a growth substrate is mounted in a delamination system. A 0.5 M aqueous NaCl solution is used as the electrolyte. A graphite plate is used as the anode. The hydrogen delamination process is carried out at a constant voltage value of 2 V. The delamination process is carried out for 10 minutes.

The above examples illustrate the solution in detail but do not limit the protection scope of the invention in any way.

## Claims

1. A manufacturing method for making large-area graphene on polymer supports by using of hydrogen delamination, during which obtaining a large-area graphene layer deposited on a polymer, with an area ranging from 1 cm2 to at least 750 cm2, takes place by electrochemical separation of graphene with the polymer from the metallic growth substrate in the form of a profiled sheet, **wherein** the separation process is carried out in a hydrogen delamination system using: graphite, silver or platinum titanium anode, aqueous NaOH, NaCl or KCl solution with a concentration in the range of 0.1 - 1 M as the electrolyte, the constant value of the electric voltage, in the range from 2 to 6 V, as a resultant of the variable value of the electric current.

2. The manufacturing method according to claim 1, **characterized in that** immediately before the application of the polymer support layer, a sheet of the metallic growth substrate with graphene of the desired surface is cut out, and then the obtained sheet is pressure-profiled.

3. The manufacturing method according to claim 1, **characterized in that** the profiled sheet is coated with a polymer layer, preferably PMMA acrylic polymer, by manual or semi-automatic application of the layer.

4. The manufacturing method according to claim 1, **characterized in that** the electrochemical delamination process is assisted mechanically by creating anchor points.

5. The manufacturing method according to claim 1, **characterized in that** the area of the metallic growth substrate without graphene with the polymer is protected with a flexible material of various origins.
